(19) Europäisches Patentamt
European Patent Office
Office européen des brevets

(11) Publication number: **0 545 451 A1**

(12) **EUROPEAN PATENT APPLICATION**

(21) Application number: **92203473.1**

(22) Date of filing: **12.11.92**

(51) Int. Cl.5: **C08G 63/672**, C08G 63/682, C08G 63/78

(30) Priority: **18.11.91 IT MI913076**

(43) Date of publication of application: **09.06.93 Bulletin 93/23**

(84) Designated Contracting States: **AT BE CH DE DK ES FR GB IT LI NL SE**

(71) Applicant: **ECP ENICHEM POLIMERI S.r.l.**
**16, Piazza della Repubblica**
**I-20124 Milano(IT)**

(72) Inventor: **Chiolle, Antonio**
**Via Camillo Mazza, 14**
**I-44100 Ferrara(IT)**
Inventor: **Maltoni, Gian Paolo**
**Via Garibaldi, 80**
**I-44100 Ferrara(IT)**
Inventor: **Stella, Romolo**
**Via dei Tigli, 11/A**
**I-45030 Occhiobello (Rovigo)(IT)**

(74) Representative: **Roggero, Sergio et al**
**Ing. Barzanò & Zanardo Milano S.p.A. Via Borgonuovo 10**
**I-20121 Milano (IT)**

(54) **Elastomeric segmented copolyether-esters endowed with high technological characteristics.**

(57) Fluorinated, elastomeric, segmented copolyether-esters consisting essentially of a multiplicity of ester units, connected to each other in head-to-tail fashion through linkages of the ester type, corresponding to the following structures:

$$-O-G-O-\overset{O}{\overset{\|}{C}}-R-\overset{O}{\overset{\|}{C}}-; \quad -O-D-O-\overset{O}{\overset{\|}{C}}-R-\overset{O}{\overset{\|}{C}}-; \text{ and}$$

$$-O-F-O-\overset{O}{\overset{\|}{C}}-R-\overset{O}{\overset{\|}{C}}-$$

wherein: G is a divalent radical deriving from a poly(alkylene oxide) glycol; D is a divalent radical deriving from an alkylene glycol; F is a divalent radical deriving from a poly(oxyperfluoroalkylene) glycol, and R is a divalent radical deriving from a dicarboxylic acid.

EP 0 545 451 A1

The present invention relates to elastomeric segmented copolyether-esters endowed with high technological characteristics.

More in particular, the present invention relates to elastomeric segmented copolyether-esters endowed with high resistances to abrasion and to the swelling by the action of oils, gasolines, fats and so on. Owing to these properties, the copolyether-esters of the present invention find particular use in the coating of telephonic cables and in the production of pipes for fuel, special gaskets and low permeability membranes.

The elastomeric segmented copolyether-esters are materials well known on the market and disclosed, for example, in US Patent Nos. 3,023,192; 3,763,109; 3,766,146; 3,784,520 etc.

They essentially consist of a multiplicity of recurring leading short-chain and long-chain ester units , connected to each other through linkages of ester type, wherein the short-chain ester units are the condensation product of a dicarboxylic acid having a molecular weight lower than 300 with a diol having a molecular weight lower than 250, and the long-chain ester units are the condensation product of a dicarboxylic acid having a molecular weight lower than 300 with at least a poly(alkylene oxide) glycol having a molecular weight of about 250-6,000 and a carbon/oxygen ratio comprised between 1.8 and 4.3.

These copolyether-esters are outstanding in the thermoplastic rubber field due to their high mechanical and physical properties, such as toughness, fatique resistance and the like.

In spite of these properties which are meaningfully higher with respect to those of the other thermoplastic rubbers, the copolyether-esters exhibit some drawbacks which prevent their use in some applications.

It is known, in fact, that the elastomeric segmented copolyether-esters exhibit low oil- and hydro-repellence, poor resistance to dirty and high coefficient of friction, so that a subsequent superficial finishing treatment is required.

In order to overcome these drawbacks, published European Patent Application No. 0,250,504 proposes to incorporate into the polymeric chain from 0.1 to 45% by moles, with respect to the total number of polyester moles, of units deriving from at least a fluorinated poly(alkylene oxide) glycole.

In example 2 of this published European patent application, a fluorinated poly(alkylene oxide) glycol containing elastomeric thermoplastic polyether-ester is prepared by carrying out first a transesterification amoung dimethyl-terephthalate, butandiol-1,4 and polyxytetramethylene glycol having an average molecular weight of 1,000 and then by completing the polycondensation in the presence of an alpha-omega-bis-hydroxy-polyoxyperfluoroalkylene having an average molecular weight of 2,000.

The amount of polyoxyperfluoroalkylene in the fluorinated polyether-ester is about 1,25% by moles. The polyether-esters containing such an amount of polyxyperfluoroalkylene have rather poor elastomeric properties, in terms of toughness and elongation at break, and their crystallization rate is rather low with consequent distorsion of the shaped articles during the injection molding.

Furthermore, the polyoxyperfluoroalkylene containing polyether-esters obtained through the above reported process exhibit good superficial properties, such as low coefficient of friction, dirty resistance and oil- and hydro- repellence, low permeability to the fluids and so on; however, in time these initial properties tend to decrease by reaching, after some ageing period, values which are even lower than those of the product which does not contain polyoxyperfluoroalkylene units.

This decay is noticeable when these polyether-esters are dripped in water, gasolines, oils, fats and so on, at quite high temperatures (higher than 60 °C) and for a rather long stay time (higher than 7 days). In fact these treatments provoke a swelling of the shaped article which in turn induces a decay of the physical-mechanical properties of the polymer, such as modulus, tensile strength, bending and tearing fatigue strength.

Finally, the polyether-esters containing the above mentioned amount of polyoxyperfluoroalkylene are not suitable to be molded by injection since delamination problems occur during the molding procedure and the obtained articles are twisted and full of blisters.

There was, therefore, the requirement to provide segmented elastomeric copolyether-esters suitable to be molded by injection to give shaped articles having a very good balance of properties, constant in time, in terms of mechanical and superficial properties combined with a higher resistance to ageing in fluids, particularly in oils, gasolines, fats and so on and with good dynamical and electrical properties and resistance to the swelling when dipped in such fluids and in water.

The present invention allows to achieve this very good combination of characteristics by binding, through esters bonds, an amount lower than 0.5% by moles of a fluorinated poly(alkylene oxide), as ester chain units with the carboxylic acid, to the copolyether-esters.

The subject matter of the present invention is, therefore, a fluorinated, elastomeric, segmented copolyether-ester consisting essentially of a multiplicity of repeating long-, short- and fluorinated- chain ester units, connected to each other in head-to-tail fashion through linkages of the ester type; said long-chain ester units being represented by the following structure:

$$-O-G-O-\overset{\overset{\displaystyle O}{\|}}{C}-R-\overset{\overset{\displaystyle O}{\|}}{C}- \qquad (I)$$

said short-chain ester units being represented by the following structure:

$$-O-D-O-\overset{\overset{\displaystyle O}{\|}}{C}-R-\overset{\overset{\displaystyle O}{\|}}{C}- \qquad (II)$$

and said fluorinated-chain ester units being represented by the following structure:

$$-O-F-O-\overset{\overset{\displaystyle O}{\|}}{C}-R-\overset{\overset{\displaystyle O}{\|}}{C}- \qquad (III)$$

wherein:

G is a divalent radical remaining after the removal of the terminal hydroxy groups from a poly(alkylene oxide) glycol having molecular weight comprised between 250 and 6,000 and a carbon/oxygen ratio of from 1.8 to 4.3;

D is a divalent radical remaining after the removal of the end hydroxy groups from an alkylene glycol having a molecular weight lower than about 250;

F is a divalent radical remaining after the removal of the end hydroxy groups from a poly(oxyperfluoroalkylene) glycols having a molecular weight comprised between 400 and 10,000; and

R is a divalent radical remaining after the removal of the carboxylic groups from a dicarboxylic acid having a molecular weight lower than about 300;

with the proviso that the short-chain ester units (II) constitute from 15 to 85% by weight of the copolyether-ester and the amount of the fluorinated chains (III) is not higher than 0.5% by moles with respect to the total moles of the copolyether-ester.

The amount of fluorinated ester chains (III) is preferably comprised between 0.01 and 0.4% by moles with respect to the total moles of the fluorinated copolyether-ester.

The fluorinated, elastomeric, segmented copolyether-esters of the present invention are characterized by properties and combination of properties which make possible to distinguish them from those having a content of poly(oxyperfluoroalkylene) glycol higher than 0.5% by moles. In fact, they exhibit:

a) a swelling in water, at 100 °C for 7 days of treatment, lower than 1%;

b) a swelling in ASTM FUEL B gasoline (70% iso-octane and 30% of toluene), at 60 °C for 7 days, lower than 2%;

c) a swelling in ASTM N.3 oil, at 100 °C for 7 days, lower than 4%; and

d) a very good resistance in water, in gasoline and in oil in the above reported conditions;

combined with very good elastomeric properties, typical of the copolyether-esters, and superficial properties, typical of the fluorinated polymers, such as oil- and hydro- repellence; low coefficient of friction and high electrical, volume and, most of all, superficial resistances.

The expression "long-chain ester chains" (I), in connection with units present in a polymer chain, relates to the reaction product of a long-chain glycol having a molecular weight comprised between 250 and 6,000, with a dicarboxy acid. Such "long-chain ester units", which constitute a repeating unit in the copolyesters of the present invention, comply with the above formula (I).

The long-chain glycols according to the present invention can be totally constituted by only one poly(alkylene oxide)glycol or by a mixture of a poly(alkylene oxide)glycol, having a molecular weight lower than 300, and a second poly(alkylene oxide)glycol having a molecular weight comprised within the range of from 300 to 6,000, in which the amount of the component having a molecular weight lower than 300 is at least equal to 10% by weight, and such that the ratio carbon to oxigen be higher than or equal to 1.8.

When used as a mixture, a poly(alkylene oxide)glycol having a molecular weight of about 250 is preferably used together with a poly(alkylene oxide)glycol having a molecular weight comprised within the range of from about 650 to 1000, in proportions of from 1:9 to 9:1.

Such long-chain glycols, used in order to prepare the polymers of the present invention, include poly-(alkylene oxide)glycols (wherein "alkylene" is a $C_2$- $C_{10}$ alkylene) such as poly(1,2- and 1,3-propylene oxide)glycol; poly(tetramethylene oxide)glycol; poly(pentamethylene oxide)glycol; poly(hexamethylene oxide)glycol; poly(heptamethylene oxide)glycol; poly(octamethylene oxide)glycol; poly(nonamethylene oxide)-glycol; poly(decamethylene oxide)glycol; and poly(1,2-butylene oxide)glycol; random copolymers or block copolymers of ethylene oxide and 1,2-propylene oxide; polyformals prepared by reacting formaldehyde with glycols such as pentamethylene glycol or glycol mixtures such as a mixture of tetramethylene glycol and pentamethylene glycol; the dicarboxymethyl acids of polyalkylene oxides, such as those deriving from poly-(tetramethylene oxide), such as, e.g.,

$HOOC-CH_2-(O-CH_2-CH_2-CH_2-CH_2)_x-O-CH_2-COOH$

or their esters. Furthermore, both polyisoprene glycol and polybutadiene glycol, their copolymers and saturated products obtained by means of their hydrogenation can be used as long-chain polymeric glycols. Additionally, the glycol esters of dicarboxy acids formed by means of the oxidation of polyisobutylene-diene copolymers can be used as raw materials.

In any case, poly(tetramethylene oxide)glycol is particularly preferred in the instant invention.

The expression "short-chain ester units", in connection with units present in a polymeric chain, relates to the reaction product of a diol having a low molecular weight (lower than about 250) with a dicarboxy acid to form ester units represented by the above formula (II).

Among the diols having a low molecular weight which react in order to form short-chain ester units, non-cyclic, alicyclic and aromatic di-hydroxy compounds are included. Diols of from 2 to 15 carbon atoms such as ethylene glycol, propylene glycol, isobutylene glycol, tetramethylene glycol, pentamethylene glycol, 2,2-dimethyl-trimethylene glycol, hexamethylene glycol, and decamethylene glycol, dihydroxycyclohexane, cyclohexanedimethanol, resorcinol, hydroquinone, 1,5-dihydroxynaphthalene, etc. are preferred. Particularly preferred are aliphatic diols containing from 2 to 8 carbon atoms.

Aromatic dihydroxy compounds which may be used are bisphenols, such as: bis(p-hydroxy)diphenyl, bis(p-hydroxyphenyl)methane, and bis(p-hydroxyphenyl)propane.

Also equivalent ester forming derivatives of diols can be used as well (for example ethylene oxide or ethylene carbonate can be used instead of ethylene glycol).

The expression "low molecular weight diols" used in the present context should be hence understood as also including all of the equivalent derivatives suitable for forming esters, on condition that the requirement relating to the molecular weight is only referred to the diol and not to the derivatives thereof.

However, 1,4-butane diol is particularly preferred for the purpose of the present invention.

The expression "fluorinated ester units" in connection with units present in a polymeric chain, relates to the reaction product of a poly(oxyperfluoroalkylene)glycol having an average molecular weight comprised between 400 and 10,000, preferably between 500 and 5,000, with a dicarboxylic acid to form ester units represented by the above formula (III).

The poly(oxyperfluoroalkylene)glycols, used for preparing the ester units of formula (III), have end groups of the type:

$-(CH_2)_v - (OCH_2-CH_2)_z - OH$ (IV)

wherein v and z can be 0 or an integer, preferably v is 0 or 1 and z is 0 or an integer from 1 to 3.

The poly(oxyperfluoroalkylene)glycols having the end groups of the above formula (IV) include those containing fluorooxyalkylene units selected from the following classes:

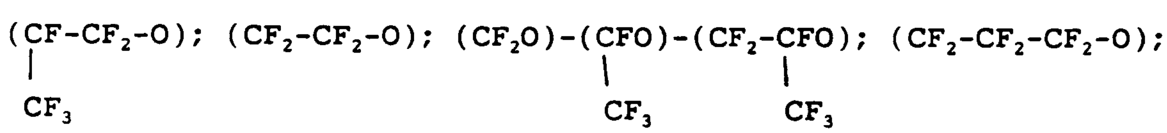

$(CF_2-CF_2-CH_2-O)$ and in particular belonging to one of the following classes:

(V) $(C_2F_4O)$, $(CF_2O)$, said units being randomly distributed along the polyoxyperfluoroalkylene chain;

(VI) $(C_3F_6O)$, $(C_2F_4O)$, (CFXO), wherein X is equal to - F or $CF_3$, said units being randomly distributed along the polyoxyperfluoroalkylene chain;

(VII) $-CH_2-CF_2-CF_2-O-$

said units being linked to one another inside the polyoxyperfluoroalkylene chain as shown by the following structural formula:

$-(-O-CF_2-CF_2-CH_2)_p-O-R'_f-O-(CH_2-CF_2-CF_2-O-)_q-$

wherein $R'_f$ is a fluoroalkylene group, p and q are integers wherein p + q is at least 2;

(VIII)

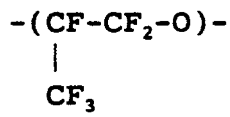

said units being linked to one another inside the polyoxyperfluoroalkylene chain as shown by the following structural formula:

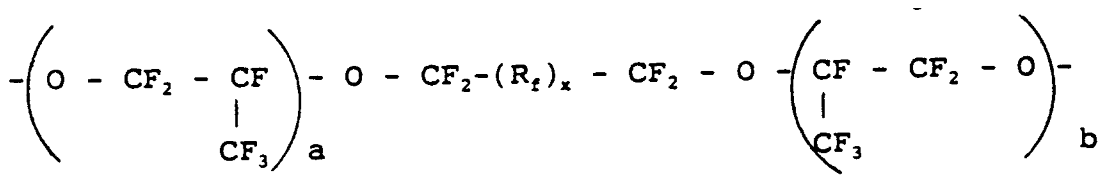

wherein $R_f$ is a fluoroalkylene group, X is 0 or 1, and a and b are integers, wherein a + b is at least 2.

Examples of difunctional derivatives having end groups of the above formula (IV) and belonging to class (V) are those comprised in the following general formula:

$HO - (CH_2CH_2O)_z - (CH_2)_v - CF_2O - (C_2F_4O)_m - (CF_2O)_n\text{--}CF_2-(CH_2)_v-(OCH_2CH_2)_z -OH$

wherein v and z have the above-defined meaning and m and n are positive integers, such that the molecular weight falls within the above mentioned range.

These products are known on the market under the trade name FOMBLIN® Z of the Society Montefluos S.p.A. and can be prepared by known methods, as described for example in U.S. Patent Nos. 3,810,874 and 3,847,978.

Examples of difunctional derivatives having end groups of formula (IV) and belonging to the above class (VI) are those having the general formula:

$HO - CH_2-CF_2-O-(C_3F_6O)_r(C_2F_4O)_s(CFXO)_t-CF_2-CH_2 - OH$

wherein X is -F or $-CF_3$ and indexes r, s, t are positive integers such that the molecular weight is as above indicated.

These compounds are known on the market under the trade name FOMBLIN® U Y of the Society Montefluos and can be prepared by photo-oxydation of $C_3F_6$ and $C_2F_4$ mixtures, as described in US Patent No. 3,665,041 and by successively converting -COF end groups into groups containing the -OH end groups, such conversion being accomplished according to known methods as described, for example, in US Patent Nos. 3,847,978 and 3,810,874.

Examples of difunctional derivatives having the end groups of the above formula (IV) and belonging to the above class (VII) are those having the general formula:

$B-CF_2CH_2(OCF_2CF_2CH_2)_p-OR'_f-O-(CH_2CF_2CF_2O)_qCH_2CF_2-B$

wherein p, q and $R'_f$ have the above mentioned meanings.

These compounds are described in published European patent application EP No 0,148,482 and the groups B, containing end -COF group, can be converted to have -OH end groups, such as described in US

Patent Nos. 3,847,978 and 3,810,874.

Examples of difunctional derivatives having the end groups of the above formula (IV) and belonging to the above class (VIII) are those having formula:

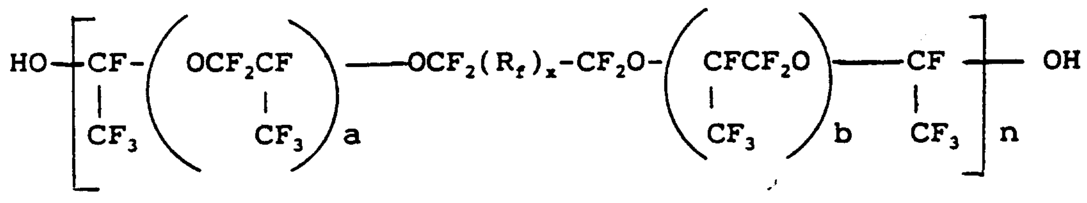

wherein a, b, $R_f$ and x have the meanings defined hereinbefore and n is a positive integer.

Such compounds are described in published European patent application EP No. 0,151,877 and the end -COF groups are converted to have -OH end groups, such as it is described in US Patent Nos. 3,847,978 and 3,810,874.

Dicarboxylic acids which may be reacted with the above long-chain glycols, the diols having a low molecular weight and the difunctional derivatives containing polyoxyperfluoroalkylene units, in order to produce the copolyether-esters according to the present invention, are aliphatic, cycloaliphatic or aromatic dicarboxylic acids having a low molecular weight, i.e., having a molecular weight of less than about 300. The term "dicarboxylic acids" as used herein also encompasses equivalent derivatives of dicarboxylic acids which show a behaviour substantially similar to the dicarboxylic acids in the reaction with glycols and diols for the formation of the copolyether-ester polymers.

These equivalent compounds include esters and ester-forming derivatives, such as, e.g., halides and anhydrides. However, the requirement with respect to molecular weight always relates to the acid and not to its ester equivalent or to its derivative suitable for forming esters.

Accordingly, the term "dicarboxylic acid" also comprises an ester of a dicarboxylic acid having a molecular weight higher than about 300, or an equivalent of a dicarboxylic acid having molecular weight higher than about 300, provided that the corresponding acid still has a molecular weight of less than about 300. The dicarboxylic acids may contain any substituent group or any combination of substituent groups which do not interfer to a significant extent with the formation of the copolyether-ester polymer and with the use of the polymer in the preparation of the end products according to the present invention.

Within the context of the present invention, by "aliphatic dicarboxylic acids" those carboxylic acids are meant which contain two carboxylic groups, each of said carboxy groups being bonded to a saturated carbon atom. If the carbon atom to which the carboxy group is bonded is a saturated one and is inside a ring, the acid is a cycloaliphatic one. Often, aliphatic acids or cycloaliphatic acids containing a conjugated unsaturation cannot be used, in that they are subject to homo-polymerization. However, some unsaturated acids, such as, e.g., maleic acid or dimer acids can still be used.

The term "aromatic dicarboxylic acids", used in the instant context, indicates those dicarboxylic acids which contain two carboxy groups, each carboxy group being bonded to a carbon atom of an either isolated or condensed aromatic ring.

It is not necessary that both of said carboxy groups are bonded to the same aromatic ring, and, when more than one ring is present in the molecule, said rings can be linked to each other through divalent radicals, such as, e.g., -O- or $-SO_2-$, or even by means of a simple bond.

Examples of aliphatic and cycloaliphatic dicarboxylic acids suitable for the purposes of the present invention are sebacic acid, 1,3-cyclohexane dicarboxylic acid, 1,4-cyclohexane dicarboxylic acid, adipic acid, glutaric acid, succinic acid, oxalic acid, azelaic acid, diethylmalonic acid, allylmalonic acid, 4-cyclohexene-1,2-dicarboxylic acid, 2-ethyl-suberic acid, 2,2,3,3-tetramethyl-succinic acid, cyclopentane dicarboxylic acid, decahydro-1,5-naphthalene dicarboxylic acid, 4,4'-dicyclohexyl dicarboxylic acid, decahydro-2,6-naphthalene dicarboxylic acid, 4,4'-methylene-bis(cyclohexyl)carboxylic acid, 3,4-furane dicarboxylic acid, 1,1-cyclobutane dicarboxylic acid, etc. Cyclohexane dicarboxylic acid and adipic acid are preferred (cyclo)aliphatic dicarboxylic acids.

Examples of aromatic dicarboxylic acids which can be used comprise phthalic acid, isophthalic acid and terephthalic acid, dibenzoic acid, substituted dicarboxylic compounds containing two benzene rings, such as, e.g., bis(para-carboxyphenylmethane), para-oxy(para-carboxyphenyl)benzoic acid, ethylene-bis(para-oxybenzoic acid), 1,5-napthalene dicarboxylic acid, 2,6-naphthalene dicarboxylic acid, 2,7-naphthalene dicarboxylic acid, phenanthrene dicarboxylic acid, anthracene dicarboxylic acid, 4,4'-sulfonyl dibenzoic acid and their $C_1$-$C_{12}$ alkyl derivatives and ring-substituted derivatives, such as, e.g., halogenated (e.g. F, Cl, Br)

derivatives, alkoxy derivatives and aryl derivatives.

Aromatic acids containing a hydroxy group, such as, e.g., para-(beta-hydroxy) benzoic acid, can be used as well, provided that an aromatic dicarboxylic acid is also present.

Aromatic dicarboxylic acids constitute a preferred class of acids for the preparation of the copolyether-esters according to the present invention.

Among the aromatic acids, those which contain from 8 to 16 carbon atoms are preferred; particularly preferred are phenylene dicarboxylic acids, i.e., phthalic acid, isophthalic acid and terephthalic acid. In particular, either terephthalic acid alone or a mixture of terephthalic acid and isophthalic acid are preferred.

It is preferred that at least about 70% by mols of the dicarboxylic acids incorporated into the polymers of the present invention are accounted for by terephthalic acid, i.e., at least about 70% of the "R" groups in the above formulae (I), (II) and (III) are 1,4-phenylene radicals.

The carboxylic acids or their derivatives, the (polymeric) glycol and the difunctional derivative containing polyoxyperfluoroalkylene units are included in the end product in the same molar proportions in which they are contained in the reaction mixture. The amount of low-molecular-weight diol actually contained in the end product corresponds to the difference between the mols of diacid and the mols of the sum of polymeric glycol and polymeric fluorinated glycol contained in the reaction mixture.

The copolyether-esters of the present invention preferably contain from about 25 to about 80% by weight of short-chain ester units corresponding to the above formula (II), with the remaining portion being constituted by long-chain ester units corresponding to the above formula (I) and fluorinated ester units of the above reported formula (III).

The most preferred copolyether-esters for the purposes of the present invention are those which are prepared from dimethylterephthalate (DMT), 1,4-butanediol (BD) and polytetramethyleneglycol or poly-(tetramethylene oxyde)glycol (PTMG) having molecular weight of about 1000 or of about 650 alone or in mixture with at least 10% by weight (based on the total amount of long-chain units) of PTMG having a molecular weight of about 250, and poly(oxyperfluoroalkylene)glycol belonging the above reported class (V).

The fluorinated, segmented, elastomeric copolyether-esters of the present invention can suitably be prepared by means of conventional known techniques of polycondensation or polytransesterification or by means of interface polymerization .

However, in order to assure that ,all the poly(oxyperfluoroalkylene)glycol present in the reaction mixture is linked with the polyether-esters chain, it is necessary that the following process conditions be followed:

(i) the polymerization is carried out in one-shot by precharging all the components forming the polyether-ester, and

(ii) the poly(oxyperfluoroalkylene)glycol is maintained, during the esterefication or ester iterchange phase, as a aqueous microemulsion of the type water-in-oil or oil-in-water.

By the term "microemulsion" it is meant a mixture macroscopically constituted by a single, optically isotropic, limpid or opalescent phase including two not-miscible liquids.

Said microemulsion can be prepared by agitation in turbulent state conditions, optionally combined with ultra-audible vibrations.

The turbulent state conditions occur, as it is known, when the power (P) absorbed by the fluid is independent from the dynamic viscosity $\mu = \tau$ (dv/dy), wherein $\tau$ = shearing stress and (dv/dy) = deformation rate.

In other terms, it is required that the power number Np, given by the relation:

$$Np = \gamma P/N^3D^5$$

wherein $\gamma$ - specific weight of the fluid, N - number of revolutions per second of the stirrer, D = external diameter of the rotor and P = absorbed power, remains practically constant with the increasing of the Reinolds number: $Re = D^2N/\mu$ (wherein $\mu$ = density of the fluid) as disclosed by Perry in "Chemical Engineers's Handbook 4th, pages 19.5 (1963).

The microemulsion of poly(oxyperfluoroalkylene)glycol is formed among the poly(alkyleneoxyde)glycol, the alkylene glycol and the dicarboxylic acid and/or the corresponding ester at the molten state. The very high contact surface between the poly(oxyperfluoroalkylene)glycol and the other reaction components, which is achieved after the microemulsion production, allows a complete reaction of the fluorinated component and, therefore, a complete introduction into the final polyether-ester chain.

A preferred process for preparing the segmented, elastomeric, fluorinated copolyether-esters, which is also a subject matter of the present invention, consists in:

- putting the reactants into a reaction reactor in the desired ratio with a slight molar excess of alkylene glycol with respect to the stoichiometric one (at least 0.1% by mol);

- heating the reactant mixture up to 200-220 °C and stirring under turbulent state conditions for a period of time necessary to prepare the microemulsion;
- maintaining such a turbulent state during the esterification phase up to a complete removal of the volatile reaction by products, water and/or alcohols;
- increasing the temperature up to 250-260 °C and decreasing the stirring as the polymerization degree increases, up to a value of about 50%, at the end of the polymerization.

In order to avoid excessively long periods of time for which the polymer has to be kept at high temperatures with the resulting possibility of irreversible thermal degradation, it is advantageous to carry out the polymerization in the presence of catalitic amounts of an ester interchange catalyst. While a wide variety of catalysts can be used, the organic titanates, such as, e.g., titanium tetrabutylate, used either alone or in combination with magnesium or calcium acetate, are preferred.

Also complex titanates, such as $Mg[HTi(OR)_6]_2$ derived from alkali metal alkoxides or alkaline-earth metal alkoxides and esters of titanic acid, may prove suitable. Inorganic titanates, such as lanthanium titanate, mixtures of calcium acetate and antimony dioxide, and lithium and magnesium alkoxides are examples of further catalysts which can be used.

The ester interchange polymerizations are generally carried out in the molten state, but inert solvents can be used as well in order to facilitate the removal of volatile components from the reaction mass at low temperatures.

Although the copolyether-esters of the present invention display many advantageous characteristics, it is sometimes advisable to stabilize the final compositions towards heat or U.V. light. Such a stabilization may be accomplished by incorporating into the reaction mixture stabilizers, such as phenols and their derivatives, amines and their derivatives, compounds containing both hydroxy and amino groups, hydroxyazines, oximes, polymeric phenol esters and salts of polyvalent metals in which the metal is in its lowest valency state. Examples of phenolic derivatives which can be used as stabilizers comprise 4,4'-bis-(2,6-di-tert.butyl-phenol), 1,3,5-tri-methyl-2,4,6-tris-[3,5-di-tert.butyl-4-hydroxybenzyl]-benzene and 4,4'-butylidene-bis-(6-tert.butyl-m-cresol) and so on.

Typical stabilizers of the amine type comprise N,N'-bis-(beta-naphthyl)-p-phenylene diamine, N,N'-bis-(1-methylheptyl)-p-phenylene diamine and phenyl-beta-naphthyl amine or its reaction products with aldehydes.

Substituted benzotriazoles and/or benzophenones are further examples of suitable U.V.-stabilizers.

The characteristics of the copolyether-ester according to the present invention can be further modified by means of the introduction of various conventional inorganic fillers, such as, e.g., carbon black, silica gel, alumina, clay, fiberglass, etc. In general, these additives increase the modulus of the material, although at the expense of elongation at break, tear strength and abrasion resistance.

Furthermore, the product can be rendered flame proof by means of the addition of various flame proofing systems containing aromatic halides, or flame proofing systems containing aliphatic halides or containing no halogen atoms at all, in amounts ranging from 15 to 45% by weight, based on the end product.

In order to allow a better understanding of the present invention, some examples are hereinafter given which further illustrate the present invention without limiting it.

All parts, ratios and parameters given in the following are by weight, unless specified otherwise.

Examples 1-12

The following process conditions were used in all the examples:

Dimethylterephthalate (DMT), isophthalic acid (IPA), 1,4-butanediol (BD), poly(tetramethylene oxide)-glycol (PTMG) having a molecular weight of 250, 650 and/or 1000 and Fomblin® Z DOL (FOM) having a molecular weight of 1600, 2000 or 2950, were charged, in the amounts listed in Table I, into a 50 autoclave equipped with 4 vertical baffles and an arm stirrer provided with a marine screw propeller at the lower end.

The temperature of the mixture was gradually increased to 140 - 150 °C over about 1 hour and 0.3 parts by weight, with respect to 100 parts by weight of the mixture, of $Ti(O\text{-}Bu)_4$, previously dissolved in a few ml of butane-diol (about 10 -20 ml), were added. The mixture was stirred in the conditions specified in the Table. After a short induction period, the ester interchange reaction started; this reaction was evidenced by an increase of the temperature at the head of the distillation column to about 65 °C, which indicated the removal of the volatile reaction by-products. The temperature of the reaction mass was gradually increased up to 200 - 220 °C (over 2 hours), by maintaining the stirring conditions constant; the reaction was continued until the distillation of the volatile reaction by-products was complete.

Vacuum was gradually applied until a residual pressure of about 0.05 mm Hg was reached (within about 30 minutes) and the heating was continued until an internal temperature of about 250 °C was reached.

At this stage, the stirring rate was brought to the normal conditions (about 50 revolutions/minute) and the polycondensation was continued until the desired molecular weight was obtained.

The end of the reaction was determined by measurements of the load applied to the stirrer, which is proportional to the viscosity of the product or to the achieved molecular weight. At the end of the reaction, the polymer was discharged by extrusion onto a water-cold conveyor belt and was chopped into small cubic granules.

The compositions and properties of the obtained fluorinated copolyether-esters are listed in the following Table I.

TABLE I

| REACTING COMPONENTS (amount in grams) | EXAMPLE No. | | | | | | | | | | | |
|---|---|---|---|---|---|---|---|---|---|---|---|---|
| | 1* | 2 | 3 | 4 | 5* | 6* | 7* | 8 | 9* | 10 | 11 | 12* |
| DMT | 3065 | 3030 | 2970 | 2855 | 2755 | 2490 | 3612 | 3612 | 2910 | 8700 | 10940 | 3612 |
| IPA | 115 | 105 | 103 | 99 | 100 | 90 | - | - | - | - | - | - |
| BD | 1220 | 1359 | 1331 | 1280 | 1650 | 1000 | 2688 | 2688 | 2160 | 4850 | 4640 | 2688 |
| PTMG 250 | 1315 | 1292 | 1267 | 1219 | 1180 | 1065 | - | - | - | - | - | - |
| PTMG 650 | 580 | 540 | 502 | 425 | 260 | - | - | - | - | - | - | - |
| PTMG 1000 | - | - | - | - | - | - | 7462 | 7462 | 6000 | 4260 | 1440 | 7462 |
| FOM 1600 | - | - | - | - | - | - | 224 | 224 | - | - | - | - |
| FOM 2000 | - | - | - | - | - | - | - | - | 750 | - | - | - |
| FOM 2950 | - | 134 | 258 | 500 | 800 | 1445 | - | - | - | 285 | 290 | 931 |
| FOM % in mol | - | 0,14 | 0,275 | 0,5 | 1,35 | 2,7 | 0,38 | 0,38 | 1,25 | 0,106 | 0,086 | 0,831 |
| Stirring rev./min | 50 | 80 | 80 | 80 | 80 | 80 | 50 | 80 | 50 | 80 | 80 | 80 |

* Comparison examples

TABLE Ia

| PHYSICAL-MECHANICAL PROPERTIES | ASTM METHOD | UNITS | EXAMPLE No. | | | | | | | | | | | |
|---|---|---|---|---|---|---|---|---|---|---|---|---|---|---|
| | | | 1* | 2 | 3 | 4 | 5* | 6* | 7* | 8 | 9* | 10 | 11 | $12^R$ |
| . Melting Point | | °C | 156,5 | 159 | 156 | 157,5 | 160 | 164,5 | 137 | 137 | 135 | 204 | 217,5 | 135 |
| . Density | D1505 | $g/cm^3$ | 1,20 | 1,21 | 1,22 | 1,23 | 1,24 | 1,30 | 1,07 | 1,07 | 1,09 | 1,21 | 1,28 | 1,10 |
| . Hardness Shore D | D2240 | Points | 47 | 47 | 46 | 44 | 49 | 48 | 21 | 23 | 23 | 52 | 62 | 23 |
| . Melt Index | D1238 | g/10' | 7 | 6,9 | 6,8 | 6,2 | 6,7 | 7,1 | 10,5 | 22 | 35 | 21 | 11 | 20 |
| . Bending Elastic Modulus | D790 | MPa | 175 | 173 | 176 | 160 | 200 | 205 | 25 | 27 | 35 | 225 | 735 | 21 |
| . Tensile Strength | D638 | MPa | 14,5 | 22,5 | 21,4 | 16,0 | 19,4 | 17,6 | 5,1 | 7,6 | 6,5 | 34,2 | 35,2 | 7,6 |
| . Elongation at break | D638 | % | 400 | 571 | 564 | 50 | 280 | 170 | 470 | 720 | 400 | 670 | 475 | 750 |
| . IZOD with notch at -30°C | D256 | J/m | 82 | 80 | 70 | 65 | 52 | 45 | NR(1) | NR(1) | NR(1) | 125 | 90 | NR(1) |
| . Tear Strength | D624B | N/mm | 104 | 104 | 119 | 50 | 109 | 105 | 32 | 45 | 60 | 135 | 230 | 50 |

* Comparison examples

(1) NR = does not break at the impact test.

TABLE Ib

| TECHNOLOGICAL PROPERTIES | ASTM METHOD | UNITS | EXAMPLE No. 1* | 2 | 3 | 4 | 5* | 6* | 7* | 8 | 9* | 10 | 11 | 12* |
|---|---|---|---|---|---|---|---|---|---|---|---|---|---|---|
| •Abrasion Resistance. | D1044 | mg/ Kcycles | 100 | 45 | 28 | 25 | 70 | 114 | 50 | 18 | 70 | 9 | 2 | 15 |
| •Water Absorption at 23°C-7 days. | D570 | * | 0,87 | 0,20 | 0,19 | 0,29 | 0,65 | 0,72 | 0,69 | 0,47 | 0,55 | 0,56 | 0,13 | 0,30 |
| •Gasoline (ASTM- B) Absorption at 60°C-7 days. | D471 | * | 7,5 | 3,5 | 3,1 | 2,7 | 4,4 | 3,9 | 6,9 | 5,1 | 3,5 | 2,3 | 0,9 | 2,0 |
| •Oil (ASTM 3) Absorption at 100°C-7 days | D471 | * | 8,7 | 5,0 | 4,1 | 3,0 | 2,7 | 3,3 | 20 | 16,5 | 15 | 4,1 | 1,3 | 13 |
| •Electric surface resistance. | D257 | Ohm | 6 | 150 | 560 | 400 | 410 | 390 | 320 | 370 | 350 | 412 | 1300 | 380 |
| •Electric volume Resistivity. | D257 | Ohm.cm | 1 | 130 | 150 | 180 | 195 | 200 | 150 | 185 | 175 | 190 | 320 | 200 |
| •Gasoline Permeability at -23°C. | E96-66 | (2) | 18 | 0,23 | 0,15 | 0,13 | 0,56 | 0,40 | 4,5 | 1,5 | 2,5 | 0,29 | 0,11 | 1,10 |
| •Water Permeability at -23°C. | E96-66 | (2) | 60 | 2,10 | 1,80 | 1,10 | 2,50 | 0,70 | 4,5 | 2,7 | 6,3 | 1,3 | 1 | 1,20 |

* Comparison examples

(2) = expressed in g mm/m day

Some of the copolyether-esters prepared according to the examples 1-12 were subjected to tests of resistance in water, resistance in oil and resistance in gasoline.

The resistance in water was determined after having dipped the sample, prepared by injection molding, in water at 100 °C for 7 days.

The resistance in oil was determined after having dipped the sample, prepared by injection molding, in ASTM No. 3 oil at 100°C for 7 days.

The resistance in gasoline was determined after having dipped the sample, prepared by injection molding, in ASTM B gasoline at 60°C for 7 days.

The measured characteristics are listed in the following Table II.

TABLE II

| EXAMPLE | | 1* | 2 | 5* | 6* | 10 | 11 |
|---|---|---|---|---|---|---|---|
| | METHOD | | | (I) | (I) | | |
| RESISTANCE IN WATER | | | | | | | |
| .Soacked amount (%) | D570 | 0,87 | 0,20 | 0,650 | 0,72 | 0,56 | 0,13 |
| .Tensile strength (MPa) | D638 | 13.5 | 22 | 11.5 | 14.0 | 33.7 | 34.5 |
| .Elongation at break (%) | D638 | 400 | 450 | 70 | 100 | 650 | 465 |
| RESISTANCE IN OIL | | | | (I) | (I) | | |
| .Soacked amount (%) | D471 | 8.7 | 5.0 | 2.7 | 3.3 | 4.1 | 1.3 |
| .Tensile strength (MPa) | D638 | 14.3 | 22.5 | 18.1 | 16.3 | 34.2 | 35.9 |
| .Elongation at break (%) | D638 | 400 | 450 | 430 | 400 | 660 | 450 |
| RESISTANCE IN GASOLINE | | | | | | | |
| .Soacked amount (%) | D471 | 7.5 | 3.5 | 4.4 | 3.9 | 2.3 | 0.9 |
| .Tensile strength (MPa) | D638 | 14.5 | 22.7 | 17.3 | 15.1 | 34.2 | 35.7 |
| .Elongation at break (%) | D638 | 400 | 470 | 350 | 230 | 650 | 460 |

(I) After the treatment the test pieces are swollen with superficial blisters and during the tensile stress tests they delamine.

## Claims

**1.** A fluorinated, elastomeric, segmented copolyether-ester consisting essentially of a multiplicity of repeating long-, short- and fluorinated- chain ester units, connected to each other in head-to-tail fashion through linkages of the ester type; said long-chain ester units being represented by the following structure:

$$-O-G-O-\overset{\displaystyle O}{\overset{\|}{C}}-R-\overset{\displaystyle O}{\overset{\|}{C}}- \qquad (I)$$

said short-chain ester units being represented by the following structure:

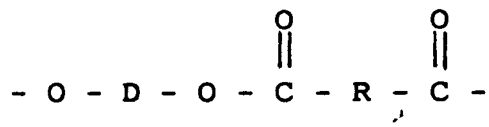

(II)

and said fluorinated-chain ester units being represented by the following structure:

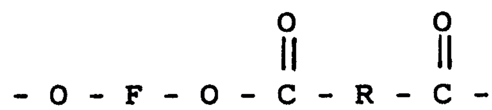

(III)

wherein:

G is a divalent radical remaining after the removal of the terminal hydroxy groups from a poly(alkylene oxide) glycol having molecular weight comprised between 250 and 6,000 and a carbon/oxygen ratio of from 1.8 to 4.3;

D is a divalent radical remaining after the removal of the end hydroxy groups from an alkylene glycol having a molecular weight lower than about 250;

F is a divalent radical remaining after the removal of the end hydroxy groups from a poly-(oxyperfluoroalkylene) glycols having a molecular weight comprised between 400 and 10,000; and

R is a divalent radical remaining after the removal of the carboxylic groups from a dicarboxylic acid having a molecular weight lower than about 300;

characterized in that the short-chain ester units (II) constitute from 15 to 85% by weight of the copolyether-ester and the amount of the fluorinated chains (III) is not higher than 0.5% by moles with respect to the total moles of the copolyether-ester.

**2.** Copolyether-ester according to claim 1, wherein the amount of fluorinated ester chains (III) is comprised between 0.01 and 0.4% by moles with respect to the total moles of the fluorinated copolyether-ester.

**3.** Copolyether-ester according to claim 1 or 2, characterized in that it exhibits:

a) a swelling in water, at 100 °C for 7 days of treatment, lower than 1%;

b) a swelling in ASTM FUEL B gasoline (70% iso-octane and 30% of toluene), at 60 °C for 7 days, lower than 2%;

c) a swelling in ASTM N.3 oil, at 100 °C for 7 days, lower than 4%; and

d) an excellent resistance in water, in gasoline and in oil in the above reported conditions.

**4.** Copolyether-ester according to anyone of the preceding claims, characterized in that the poly(alkylene oxide)glycol consists of mixture containing at least 10% by weight of a poly(alkylene oxide)glycol having a molecular weight lower than 300, the remainig part being a poly(alkylene oxide)glycol having a molecular weight comprised within the range of from 300 to 6,000.

**5.** Copolyether-ester according to claim 4, characterized in that the poly(alkylene oxide)glycol consists of a mixture of a poly(alkylene oxide)glycol having a molecular weight comprised within the range of from about 650 to 1000 and one having a molecular weight of about 250, in the proportions of from 1:9 to 9:1.

**6.** Copolyether-ester according to anyone of the preceding claims, wherein the poly(alkylene oxide)glycol is poly(tetramethylene oxide)glycol.

**7.** Copolyether-ester according to anyone of the preceding claims, wherein the alkylene glycol having a molecular weight lower than 250 is 1,4-butane diol.

**8.** Copolyether-ester according to anyone of the preceding claims, wherein the dicarboxylic acid having a molecular weight lower than 300 is a phenylene dicarboxylic acid.

**9.** Copolyether-ester according to claim 8, wherein the phenylene dicarboxylic acid is terephthalic acid or a mixture of terephthalic acid and isophthalic acid.

**10.** Copolyether-ester according to anyone of the preceding claims, wherein at least about 70% of the "R" groups in formulae (I), (II) and (III) are 1,4-phenylene radicals.

**11.** Copolyether-ester according to anyone of the preceding claims, wherein the poly(oxyperfluoroalkylene)-glycol has a molecular weight comprised between 500 and 5,000.

**12.** Copolyether-ester according to anyone of the preceding claims, wherein the poly(oxyperfluoroalkylene)-glycol has end groups of the type:

$-(CH_2)_v - (OCH_2-CH_2)_z - OH$ (IV)

wherein v and z can be 0 or an integer.

**13.** Copolyether-ester according to claim 12, wherein v is 0 or 1 and z is 0 or an integer from 1 to 3.

**14.** Copolyether-ester according to anyone of the preceding claims, wherein the poly(oxyperfluoroalkylene)-glycol includes all the glycols containing fluorooxyalkylene units selected from the following classes:

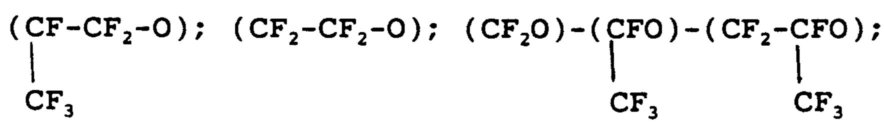

$(CF_2-CF_2-CF_2-O)$; $(CF_2-CF_2-CH_2-O)$.

**15.** Copolyether-ester according to claim 14, wherein the poly(oxyperfluoroalkylene)glycol belonges to one of the following classes:

(V) $(C_2F_4O)$, $(CF_2O)$, said units being randomly distributed along the polyoxyperfluoroalkylene chain;

(VI) $(C_3F_6O)$, $(C_2F_4O)$, (CFXO), wherein X is equal to - F or $-CF_3$, said units being randomly distributed along the polyoxyperfluoroalkylene chain;

(VII) $-CH_2-CF_2-CF_2-O-$

said units being linked to one another inside the polyoxyperfluoroalkylene chain as shown by the following structural formula:

$-(-O-CF_2-CF_2-CH_2)_p-O-R'_f-O-(CH_2-CF_2-CF_2-O-)_q-$

wherein $R'_f$ is a fluoroalkylene group, p and q are integers wherein $p+q$ is at least 2;

(VIII)

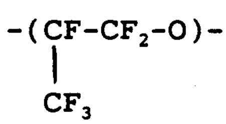

said units being linked to one another inside the polyoxyperfluoroalkylene chain as shown by the following structural formula:

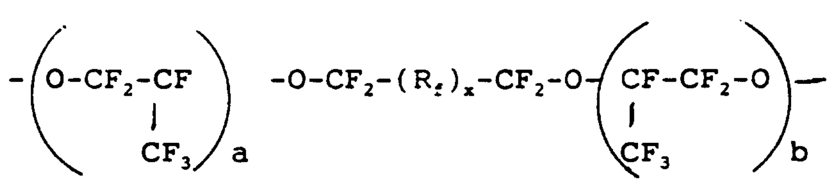

wherein $R_f$ is a fluoroalkylene group, X is 0 or 1, and a and b are integers, wherein a + b is at least 2.

**16.** Copolyether-ester according to anyone of the preceding claims, wherein the poly(oxyperfluoroalkylene)-glycol has formula:

$$HO-(CH_2CH_2O)_z-(CH_2)_v-CF_2O-(C_2F_4O)_m-(CF_2O)_{n-} - CF_2-(CH_2)_v-(OCH_2CH_2)_z-OH$$

wherein v and z have the meaning of claim 12 and m and n are positive integers, such that the molecular weight is comprised between 400 and 10,000 and preferably between 500 and 5,000.

**17.** A process for preparing the fluorinated, segmented, elastomeric copolyether-esters according to any one of the preceding claims, characterized in that the polymerization of the poly(alkyleneoxide)glycol, the alkylene glycol, the poly(oxyperfluoroalkylene)glycol and the dicarboxylic acid is carried out in one shot and the poly(oxyperfluoroalkylene)glycol is maintained, during the esterefication or ester interchange phase, as a aqueous microemulsion of the type water-in-oil or oil-in-water.

**18.** Process according to claim 17, wherein the aqueous microemulsion is prepared by agitation in turbulent state conditions, optionally combined with ultra-audible vibrations.

**19.** Process according to claim 17 or 18, characterized in that it consists in:
- putting the reactants into a reaction reactor in the desired ratio with a slight molar excess of alkylene glycol with respect to the stoichiometric one (at least 0.1% by mol);
- heating the reactant mixture up to 200-220 °C and stirring under turbulent state conditions for a period of time necessary to prepare the microemulsion;
- maintaining such a turbulent state during the esterification phase up to a complete removal of the volatile reaction by products;
- increasing the temperature up to 250-260 °C and decreasing the stirring as the polymerization degree increases, up to a value of about 50%, at the end of the polymerization.

**20.** Process according to anyone of the preceding claims from 17 to 19, wherein the polymerization is carried out in the presence of an organic titanate, such as, e.g., titanium tetrabutylate, used either alone or in combination with magnesium or calcium acetate.

European Patent Office

# EUROPEAN SEARCH REPORT

Application Number

EP 92 20 3473

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y<br><br>D | WO-A-8 703 608 (AUSIMONT S.P.A.)<br>* page 9, line 11 - line 16; claims 1-15 *<br>& EP-A-0 250 504 | 1-16,20 | C08G63/672<br>C08G63/682<br>C08G63/78 |
| D,Y | US-A-3 784 520 (GUENTHER KURT HOESCHELE)<br>* claims 1-9; examples 1-4 * | 1-16,20 | |
| A | DATABASE WPIL<br>Week 8220,<br>Derwent Publications Ltd., London, GB;<br>AN 82-40776E<br>& JP-B-57 020 009 (FUJIKURA CABLE WORKS KK) 26 April 1982<br>* abstract * | 18 | |
| A | EP-A-0 312 469 (EASTMAN KODAK COMPANY) | | |
| A | MACROMOLECULES.<br>vol. 23, no. 1, 8 January 1990, EASTON US<br>pages 348 - 350<br>F. PILATI AND M. TOSELLI 'Surface Investigation bij ESCA of Poly(ethylene terephthalate)-Perfluoro Polyether Block Copolymers'<br>* the whole document * | 1 | |

TECHNICAL FIELDS SEARCHED (Int. Cl.5)

C08G

The present search report has been drawn up for all claims

| Place of search | Date of completion of the search | Examiner |
|---|---|---|
| THE HAGUE | 06 APRIL 1993 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)